# EUROPEAN PATENT SPECIFICATION

(11) **EP 2 096 016 B1**
(45) Date of publication and mention of the grant of the patent: **09.04.2014**
(21) Application number: 09153342.2
(22) Date of filing: 20.02.2009
(51) Int. Cl.: B62B 7/10, B62B 7/14

(54) **Stroller having a foldable chassis**
Kinderwagen mit klappbarem Rahmen
Poussette avec châssis pliable

(30) Priority: 29.02.2008 SE 0800495
(43) Date of publication of application: 02.09.2009
(73) Proprietor: Care Barnvagnar AB, 201 23 Malmö (SE)
(72) Inventor: Johansson, Lars-Eric, 283 45, Osby (SE); Holma, Thomas, 376 37, Svängsta (SE); Blomkvist, Björn, 28534, Markaryd (SE); Handberg, Ulf, 19466, Upplands Väsby (SE)
(74) Representative: Aurell, Henrik

(56) References cited:
- EP-A2- 0 522 783
- EP-A2- 1 755 333
- FR-A- 390 374
- FR-A- 1 098 424
- GB-A- 323 647
- US-A1- 2005 067 813

## Description

### FIELD OF THE INVENTION

The present invention relates to a stroller comprising a foldable chassis. Strollers of this type can comprise fittings for a passenger, such as a seat unit, lie unit, baby car seat or similar, the fittings being detachably connectable to the chassis, wherein the chassis, for example, can be connected to a seat unit. Alternatively, such a chassis is fixed to a seat unit. Generally, seat units comprise a seat and a foot rest connected to the seat.

### PRIOR ART

A plurality of different types strollers having a foldable chassis are disclosed in the prior art.

Such types of strollers are for example disclosed in WO2007/045149 and FR 390 374.

FR 390 374 discloses a foldable baby carriage having an arrangement, on an elastically suspended frame with axles of two pairs of wheels, of members hinged to said frame, and, at the same time, to each other in order to be able to unfold in a cross-piece joint. On the upper ends of the members sits a frame which forms the seat for the carriage, and onto which seat a back rest is hinged with which a leaf spring is coupled serving as a lock to ensure the rigidity of the unit, and which it suffices to disengage to fold the carriage.

The stroller disclosed in WO2007/045149 comprises a foldable chassis and fittings, such as a seat unit having a seat, a back rest and a foot rest, being connectable to the chassis. The fittings are detachably connectable to the chassis through locking means. The chassis comprises a first bar provided with wheels and a second bar provided with wheels, wherein the second bar is connected to a handle. The second bar is foldable in a direction towards the first bar while bringing the wheels towards each other.

One problem with such prior art strollers is that they are difficult to fold.

One drawback with such prior art strollers is that they are cumbersome and take up a lot of space and are difficult to handle, store and transport in the folded position due to their design.

One further drawback with such prior art strollers is that the field of application is limited and that the design lacks in flexibility.

### BRIEF DESCRIPTION OF THE INVENTION

An object of the present invention is to overcome the above-mentioned drawbacks and problems of the prior art. The stroller according to the invention as claimed in claim 1 results in a simple and convenient folding also when a fitting in the form of for example a seat unit is connected thereto. Further, the stroller according to the invention results in an effective folding giving a compact stroller being easy to store in the folded position.

One object with one embodiment of the present invention is to provide a stroller which is flexible to use and wherein a fitting, such as a seat unit, can be positioned both in the direction of travel and in the opposite direction, i.e. that the fitting is reversible and connectable to the chassis both when the passenger is facing forward in the direction of travel and when the passenger is facing backward towards the pusher, while the stroller is foldable independent of the position of the fitting.

One further object of one embodiment of the present invention is to provide a stroller having fittings being detachably connectable to a foldable chassis, wherein the fittings in a simple and convenient way can be connected to and removed from the chassis.

The present invention relates to a stroller comprising a foldable chassis and a seat unit connected to the chassis, wherein the seat unit comprises a seat and a foot rest connected to the seat through an articulated joint, and wherein the chassis comprises a base provided with wheels, a first bar connected to the base through a first pivot and being provided with a handle, and a second bar connecting the base and the first bar, so that the first bar is foldable when folding the stroller, **characterised in that** the first bar is connected to the seat unit, wherein the first bar is foldable forward in the direction of travel while bringing along the seat unit when folding the stroller, and that the chassis is provided with a stopping surface for engaging a portion of the foot rest when folding the stroller, wherein the foot rest engages the stopping surface during folding of the stroller and a free end of the foot rest is forced around the articulated joint while forming an automatic folding of the foot rest. The stroller being arranged so that the foot rest is folded automatically provides a compact and convenient stroller in the folded position while the folding can be performed in a simple and convenient manner.

Suitably, the stopping surface is arranged under the seat when the stroller is unfolded, so that a distance between the stopping surface and the articulated joint is smaller than a length of the foot rest, wherein a back portion of a free end of the foot rest temporarily engages the stopping surface when folding the stroller. Hence, the stopping surface is arranged in the path of rotation of the foot rest to retain the foot rest when the seat unit is rotated as a consequence of the folding.

According to one embodiment of the invention a cross bar is connected to the base and comprises, supports or is provided with the stopping surface. The cross bar can be formed with a radially upwards projecting curve in a middle portion of the cross bar, which curve forms the stopping surface. The stopping surface can be formed by a front portion of a load tray, and the load space of the load tray can form a storing space for the foot rest in the folded position of the stroller. Hence, the foot rest can be folded automatically and can be positioned in the load tray of the stroller for storing during for example transport or other handling of the folded stroller, wherein a very compact and convenient stroller is provided in the folded position.

For example, the articulated joint of the foot rest comprises a blocking device so that the foot rest can be blocked in the desired position when the stroller is in its unfolded position and wherein the blocking device is so arranged that it allows turning around the articulated joint in at least one direction when folding the stroller. The blocking device can be arranged for blocking the foot rest against turning downwards in a direction towards the stopping surface and allowing turning in the opposite direction. Hence, the articulated joint can be blocked for supporting the weight of the legs of a passenger and feet while the foot rest simultaneously is unblocked and freely rotatable in the opposite direction. For example, the blocking device is controllable by means of a control device in a conventional manner for releasing the articulated joint.

The seat unit can comprise a loop extending across the seat unit to increase the safety of the passenger. The loop can be connected to a portion of the seat unit by means of a lockable hinge, which can be released when the foot rest is folded to a predetermined angle towards the loop, so that the foot rest, during folding of the stroller, is folded while bringing the loop towards a seat face of the seat. Hence, the foot rest engages the loop, wherein the loop will follow the foot rest during folding. Hence, an automatic folding also of the loop is provided.

The seat unit can be detachably connectable to the chassis by means of a first locking means connected to the chassis and a second locking means connected to the seat unit, which locking means are symmetrical or arranged so that the seat unit is detachably connectable to the chassis in the direction of travel and in the opposite direction while the stroller is foldable irrespective of the direction of the seat unit. The first locking means can comprise a space for receiving and at least partially enclosing the second locking means. Further, the first locking means can comprise a central lock portion for cooperation with a lock hook of the second locking means, which lock hook can be operated by means of a control means. The second locking means can comprise two opposite tongues forming a central gap, wherein the lock hook projects into the central gap when cooperating with the lock portion while forming a locking mechanism, and wherein the lock hook is displaceable towards one of the tongues when the control means is operated to release the lock portion.

For example, the lock hook is formed with an inclined sliding surface for engaging the lock portion when the second locking means is inserted into the first locking means, so that the lock portion forces the lock hook to the side when the lock portion passes the lock hook. When the lock portion has passed the lock hook the lock hook returns to a portion in the central gap for enclosing the lock portion, so that the lock portion not can pass the lock hook in the opposite direction until the lock hook is moved to the side by means of the control means. One of the tongues can be arranged with a receiving space for receiving the lock hook when the control means is operated, so that the lock hook is displaced into the receiving space when the control means is operated. The locking means can be tapered to facilitate insertion of the second locking means into the first locking means. Further, the central gap can be tapered in the opposite direction, i.e. so that the central gap is narrower in the upper part than in the lower part.

Further characteristics and advantages of the present invention will become apparent from the description of the embodiments below, the appended drawings and the dependent claims.

### BRIEF DESCRIPTION OF THE DRAWINGS

The invention will now be described in more detail by means of embodiment examples and with reference to the enclosed drawings, on which:
Fig. 1 is a schematic side view of a stroller according to one embodiment of the present invention, showing a foldable chassis having a fitting in the form of a seat unit, the seat unit being connected to the chassis in the direction of travel,
Fig. 2 is a schematic side view of the stroller according to Fig. 1, wherein a fitting in the form of a seat unit is connected to the chassis in the opposite direction,
Fig. 3 is a schematic side view of the stroller according to Fig. 2, wherein a fitting in the form of a lie unit is connected to the chassis,
Fig. 4 is a schematic side view of the stroller according to Fig. 1 in the unfolded position,
Fig. 5 is a schematic side view of the stroller according to Fig. 1 during the folding thereof, showing a foot rest of the seat unit engaging a stopping surface of the chassis,
Fig. 6 is a schematic side view of the stroller according to Fig. 1 during the folding thereof, showing the folding of the foot rest by means of the stopping surface,
Fig. 7 is a schematic side view of the stroller according to Fig. 1 during the folding thereof, showing the folding of the foot rest by means of the stopping surface,
Fig. 8 is a schematic side view of the stroller according to Fig. 1 during the folding thereof, showing the folding of a loop of the seat unit and the foot rest,
Fig. 9 is a schematic side view of the stroller according to Fig. 1 in the folded position, showing the position of the foot rest in a load tray of the chassis,
Fig. 10 is a schematic front view of a lower portion of the stroller, showing the stopping surface according to one embodiment of the present invention,
Fig. 11 is a schematic and partially sectional view of a first locking means and a portion of a second locking means for detachable connection of the fitting with the chassis, wherein the second locking means is released from the first locking means,
Fig. 12 is a schematic view according to Fig. 11, showing the connection of the first locking means with the second locking means,
Fig. 13 is a schematic view according to Fig. 11, wherein the first locking means is connected to the second locking means, and
Fig. 14 is a schematic cross sectional view of the first locking means connected to the second locking means according to one embodiment of the invention.

### THE INVENTION

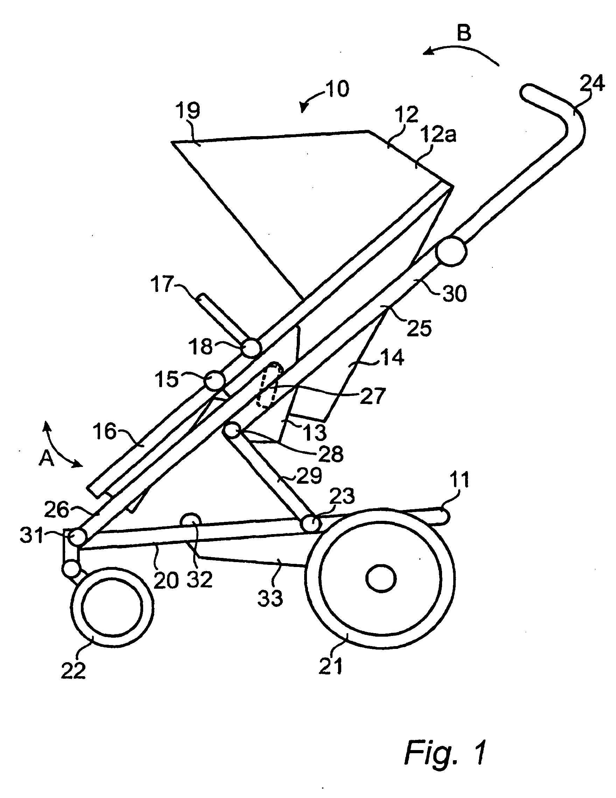

With reference to Fig. 1 a stroller 10 is illustrated schematically according to one embodiment of the invention. The stroller 10 comprises a foldable chassis 11 and a fitting 12 for a passenger, such as a baby or a child, the fitting 12 being detachably connectable to the chassis 11. In the embodiment of Fig. 1 the fitting 12 is a seat unit 12a comprising a seat 13, a back rest 14 and a foot rest 16 connected to the seat 13 through an articulated joint 15, so that the foot rest 16, by turning around the articulated joint 15 in the direction of the arrows A, can be adjusted and, by means of a blocking device, blocked in the desired position. According to one embodiment of the invention the seat unit 12a is also provided with a loop 17 being connected to the seat 13 through a hinge 18 that can be blocked. For example, the seat unit 12a is provided with a conventional hood 19. In the embodiment of Fig. 1 the seat unit 12a is directed forward in the direction of travel of the stroller 10.

The chassis 11 comprises a base 20 provided with wheels. For example, the base 20 is provided with at least one rear wheel 21 and at least one front wheel 22. For example, the stroller 10 comprises a pair of front wheels and a pair of rear wheels. Alternatively, the stroller 10 comprises three wheels. For example, the front wheel 22 is connected to the base 20 through a swivel. The chassis 11 further comprises a first bar 25 connected to the base 20 through a first pivot 23 and provided with a handle 24, and a second bar 26 connecting the base 20 and the first bar 25, so that the first bar 25 is foldable forward in the direction of travel as illustrated by means of the arrow B while bringing along the fitting 12 during the folding of the stroller 10. The folding of the stroller 10 is described in more detail below. For example, the chassis 11 comprises a set of the first bar 25 and the second bar 26 on each side thereof, wherein the base 20 supports two interconnected structures comprising the first bar 25 and the second bar 26.

The first bar 25 is connected to the base 20 through the first pivot 23, wherein the first bar 25 is pivotal around the first pivot 23 when folding the stroller 10. Further, the first bar 25 is pivotally connected to the second bar 26 through a link arm 27, which is illustrated by means of dashed lines in Fig. 1, wherein the first bar 25 is pivotally arranged in relation to the second bar 26 through the link arm 27 when folding the stroller 10. Between the first pivot 23 and the link arm 27 the first bar 25 is provided with a second pivot 28 forming a first bar portion 29 between the first pivot 23 and the second pivot 28 and a second bar portion 30 between the second pivot 28 and the handle 24, wherein the first bar portion 29 and the second bar portion 30 are rotatable around the second pivot 28 when folding the stroller 10. The first bar portion 29 extends from the base 20 in an inclined direction upward and forward in the direction of travel to the second pivot 28, wherein the second bar portion 30 extends diagonally from the second pivot 28 and upward and backward to the handle 24 when the stroller 10 is in its unfolded position.

The second bar 26 is connected to the base 20 through a third pivot 31 around which the second bar 26 is rotatable while the second bar 26 also is rotatable in relation to the first bar 25 through the link arm 27 during folding of the stroller 10. The second bar 26 extends diagonally from the third pivot 31 upward and backward and extends substantially in parallel with the first bar 25 when the stroller 10 is unfolded. The second bar 26 extends beyond the second pivot 28 to the link arm 27. According to one embodiment of the invention a portion of the second bar 26 is supported by a portion of the first bar 25 when the stroller 10 is unfolded. Of course, the chassis 11 comprises a locking device for locking the chassis 11 in the unfolded position, which not is illustrated in the drawings. The locking device is for example arranged conventionally, so that the locking device is locked when the stroller 10 is in its unfolded position and can be unlocked by means of a control means.

The chassis 11 further comprises a stopping surface 32 to provide automatic folding of the foot rest 16 of the seat unit 12a when folding the stroller 10, which is described in more detail below. The stopping surface 32 is arranged for engaging a portion of the foot rest 16 and to at least temporarily retain said portion of the foot rest 16, so that the foot rest 16 is forced around the articulated joint 15. For example, the base 20 comprises the stopping surface 32, wherein the stopping surface for example is formed by a bar or similar extending perpendicular to the direction of travel or by a projecting portion arranged under the seat unit 12a. For example, the stopping surface 32 is formed by a front portion of a load tray 33 of the chassis 11, which load tray 33 is arranged under the seat unit 12a. According to the illustrated embodiment the stopping surface 32 is arranged substantially level with the base 20, between the front wheel 22 and the rear wheel 21.

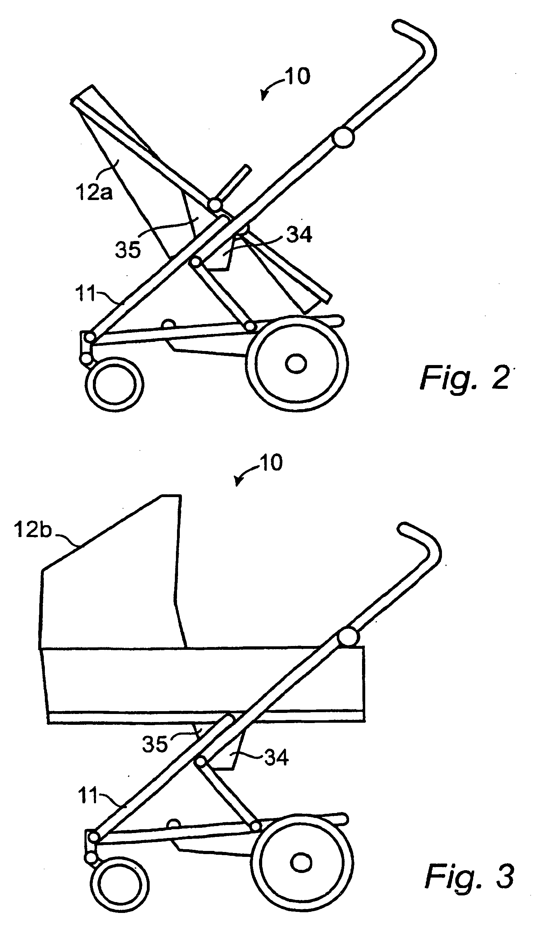

With reference to Fig. 2 the stroller 10 is illustrated with the seat unit 12a in the opposite direction compared to Fig. 1, i.e. so that the passenger is facing the pusher. Hence, the fitting 12 is reversible, wherein the fitting is detachably connectable with the chassis 11 both in the direction of travel and in the opposite direction. To provide this the chassis 11 comprises a first locking means 34 for receiving a second locking means 35 of the fitting 12. For example, a set of the first and second locking means 34, 35 is arranged on each side of the stroller 10. For example, the first locking means 34 is connected to the second bar portion 30 of the first bar 25. The locking means 34, 35 are symmetrical or arranged so that the fitting 12 is connectable to the chassis 11 both in the direction of travel and in the opposite direction, which is described in more detail below. The stroller 10 is foldable also when the seat unit 12a is arranged in a direction towards the handle 24 and, if present, a pusher.

With reference to Fig. 3 the stroller 10 is illustrated according to one embodiment of the invention in which the chassis 11 is connected to a fitting 12 in the form of a lie unit 12b. Alternatively, the fitting 12 is arranged as a baby car seat. The chassis 11 is foldable also when supporting a fitting 12 in the form of a lie unit 12b or a baby car seat.

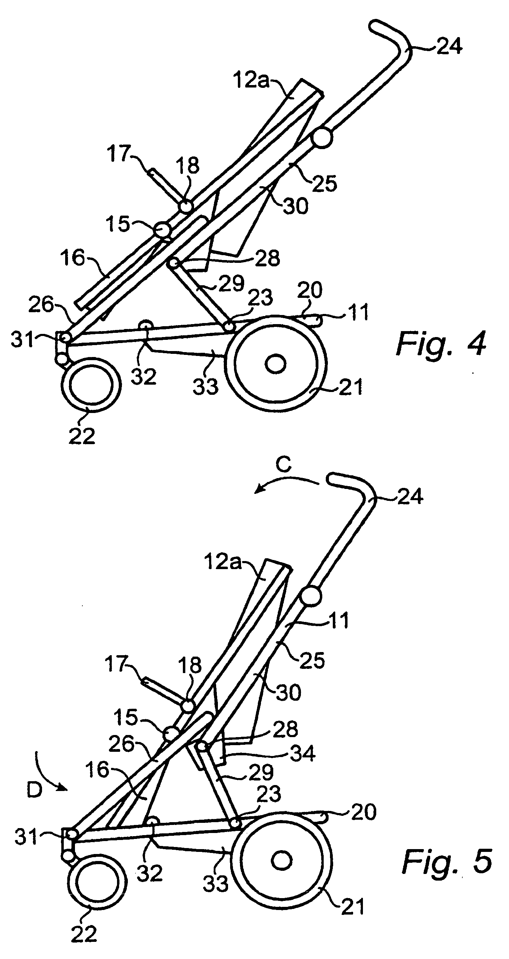

Fig. 4-9 is a set of figures illustrating folding of the stroller 10 when the chassis 11 is provided with a fitting 12 in the form of the seat unit 12a. The folding works in a corresponding way when the chassis 11 supports other fittings 12, such as the lie unit 12b, of course with the exception of the automatic folding of the foot rest 16.

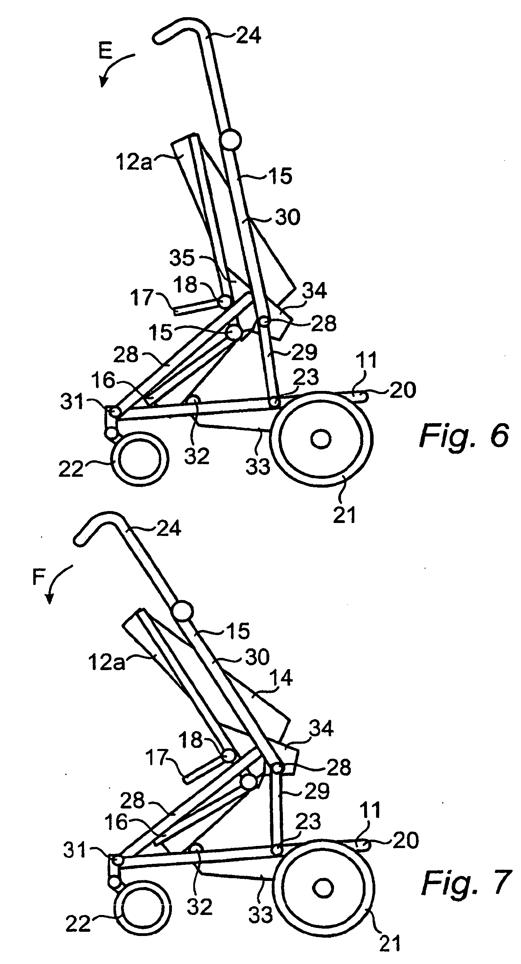

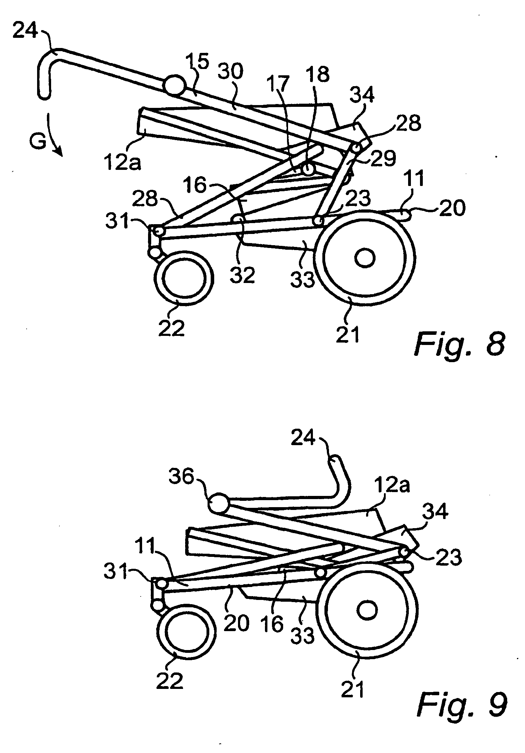

With reference to Fig. 4 the stroller 10 is illustrated in its unfolded position, wherein the chassis 11 is in its unfolded position while carrying the seat unit 12a. In the unfolded position an upper portion of the second bar 26 is arranged substantially in parallel with the lower part of the second bar portion 30 while a free end of the foot rest 16 simultaneously projects downward or diagonally downward and forward, such as substantially along the direction of the second bar 26 towards the third pivot 31. For example, the first bar portion 29 and the second bar portion 30 support the second bar 26 in the unfolded position. The chassis 11 is blocked in the unfolded position to prevent undesired folding thereof. The blocking is released by means of control means, which may be arranged conventionally and are not illustrated in the drawings. To fold the stroller 10 the blocking is released by means of the control means, wherein the handle 24 is moved forward in the direction of arrow C as illustrated in Fig. 5 while bringing along the second bar portion 30 of the first bar 25 around the upper end of the second bar 26 by means of the link arm 27. Simultaneously, the first bar portion 29 of the first bar 25 is turned around the first pivot 23, wherein the second pivot 28 is removed from the second bar 26. Hence, the second bar portion 30 of the first bar 25 is turned around the link arm 27 and around the second pivot 28 while bringing the first locking means 34 and the second locking means 35 along therewith, so that the seat unit 12a is turned accordingly. Consequently, the foot rest 16 is turned towards the stopping surface 32 in the direction of arrow D until the foot rest 16 engages the stopping surface 32. Hence, the stopping surface 32 engages a portion of the foot rest 16, such as a rear and lower part at the free end of the foot rest 16 to prevent the foot rest 16 from turning with the rest of the seat unit 12a during folding of the stroller 10. The articulated joint 15 is for example arranged so that it can be blocked in one direction only, i.e. downward in a direction towards the underside of the seat, to support the weight of the feet and legs of a passenger, wherein the foot rest 16 can be rotated freely in the opposite direction, i.e. upward in a direction towards the seat face of the seat. Alternatively, the articulated joint 15 is arranged with blocking means which is released during folding of the stroller 10. Hence, the foot rest 16 and the articulated joint 15 are arranged so that the foot rest 16 is turned around the articulated joint 15 when the foot rest 16 abuts against the stopping surface 32 while the first bar 25 simultaneously is turned further in the direction of the arrows E and F as illustrated in Fig. 6 and Fig. 7. Hence, the first bar 25 is turned further while bringing along the seat 13 and the back rest 14 of the seat unit 12a, wherein the foot rest 16 is retained by means of the stopping surface 32, so that the foot rest 16 is folded towards the inner or upper side of the seat 13. When the turning continues, as illustrated by means of the arrow G in Fig. 8, the loop 17 is folded towards the foot rest 16, wherein the blocking of the loop 17 is released, so that the loop 17 abuts against and is retained by the foot rest 16 while the first bar 25 simultaneously is turned while bringing along therewith the seat 13 and the back rest 14 of the seat unit 12a. When the foot rest 16 has been rotated around the articulated joint 15 towards the seat 13 it passes the stopping surface 32. For example, the foot rest 16 is arranged with a length and position which in combination with the position of the stopping surface 32 and the design of the bars 25, 26 will allow turning of the foot rest 16 around the articulated joint 15 in a predetermined angle, after which the foot rest 16 passes the stopping surface 32 and then finally is folded downward for storing in the load tray 33 in the folded position as illustrated in Fig. 9. Hence, the first bar portion 29 of the first bar 25 is turned around the first pivot 23 from the unfolded position in which it extends diagonally upward and forward to the folded position in which the first bar portion extends substantially backward. The second bar portion 30 is turned around the link arm 27 and the second pivot 28 from the unfolded position in which the second bar portion 30 extends from the second pivot 28 and diagonally upward and backward to the folded position in which the second bar portion 30 extends substantially forward or somewhat diagonally upward and forward. The second bar 26 is turned around the third pivot from the unfolded position in which it extends substantially in parallel with the second bar portion 30 to the folded position in which it extends substantially backward. To unfold the stroller 10 the procedure described with reference to Fig. 4-9 is conducted in a substantially reversed order, wherein the first bar 25 is moved upward and backward in the opposite direction.

According to one embodiment of the present invention the handle 24 is connected to the first bar 25 through a hinged joint 36, so that the handle 24 is adjustable in height and can be adapted to different users and so that the handle 24 can be folded when folding the stroller 10. Hence, the handle 24 is rotatable around the hinged joint 36 to the desired position, wherein it can be blocked in the desired position. For example, the hinged joint 36 is arranged conventionally. As illustrated in Fig. 9 the handle 24 is foldable by turning around the hinged joint 36, wherein the handle 24 takes a position above the back rest 14 or at the outer side of the back rest.

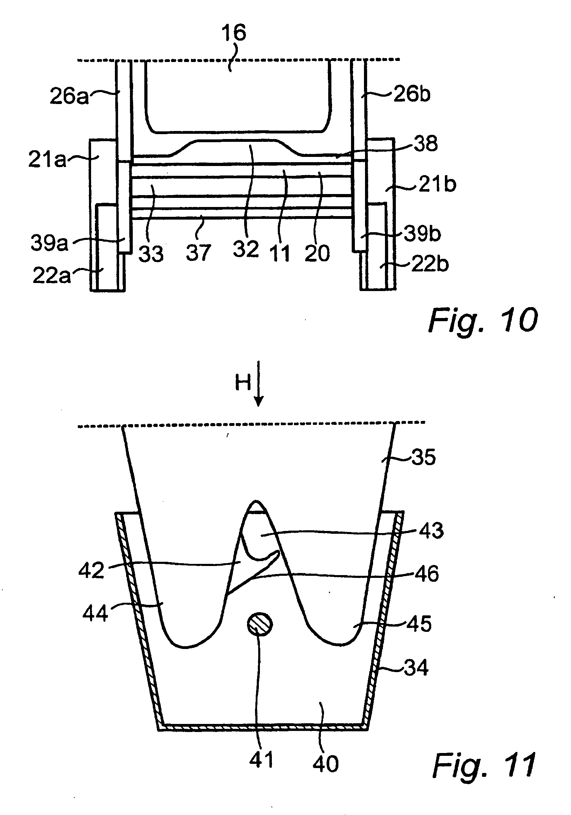

With reference to Fig. 10 a lower part of the stroller 10 is illustrated according to one embodiment of the invention when the stroller 10 is unfolded. In the embodiment of Fig. 10 a first rear wheel 21a is connected to a second rear wheel 21 b through a wheel shaft 37. The first front wheel 22a and the second front wheel 22b are connected to the base 20 through a swivel 39a, 39b or similar, so that the front wheels 22a, 22b are rotatable to facilitate steering of the stroller 10. Further, the second bars 26a, 26b are interconnected through the base 20. Further, a cross bar 38 is connected to the base 20, which cross bar 38 extends substantially in parallel with the wheel shaft 37 and supports the stopping surface 32. For example, the cross bar 38 is formed with an upward projecting bend or curve in a center portion of the cross bar 38, which curve forms the stopping surface 32 for engaging the foot rest 16 when folding the stroller 10. For example, the cross bar 38 a front portion of the load tray 33, wherein the cross bar 38 is part of the load tray 33. Alternatively, the cross bar 38 supports the front portion of the load tray 33. Alternatively, the cross bar 38 is arranged separately.

With reference to Figs. 11-13 the locking means 34, 35 for detachable connection of the fitting 12 with the chassis 11 are illustrated schematically. In Fig. 11 the second locking means 35 is released from the first locking means 34. The first locking means 34 is connected to the chassis 11 and the second locking means 35 is connected to the fitting 12, such as the seat unit 12a described above or the lie unit 12b. For example, the first locking means 34 is connected to the second bar portion 30 of the first bar 25. According to one embodiment of the invention locking means 34, 35 are arranged on each side of the chassis 11 and the fitting 12.

The first locking means 34 is arranged as a container having a space 40 for receiving and partially enclosing a portion of the second locking means 35. The first locking means 34 is arranged symmetrical with a tapered form, wherein the first locking means 34 is arranged with a wider upper portion and a narrower lower portion to facilitate insertion of the second locking means 35 therein. In the space 40 a lock portion 41 is arranged for cooperation with a lock hook 42 of the second locking means 35. The lock portion 41 is for example arranged as a fixed and projecting pin or similar, For example, the lock portion 41 extends between opposite inner walls of the first locking means 34 inside the space 40. The lock portion 41 is arranged substantially in the middle of the space 40, so that the second locking means 35 is connectable with it in two directions, i.e. both when the lock hook is directed forward in the direction of travel and when the lock hook 42 is directed in the opposite direction backward.

The second locking means 35 comprises two opposite and interconnected tongues 44, 45 forming a central gap 43 between them, wherein the lock hook 42 projects into the central gap 43 in an idle position, which idle position is illustrated in Fig. 11. For example, the lock hook 42 is biased by means of a spring or similar towards the idle position. The tongues 44, 45 are tapered to fit in the first locking means and so that the gap 43 is tapered in the opposite direction, i.e. so that the gap 43 is formed with a thinner inner or upper portion and a wider outer or lower portion. The second locking means 35 is arranged so that it can be brought into and connected to the first locking means 34 in two opposite directions. For example, the locking means 34, 35 are substantially symmetrical, at least in the lateral direction of the locking means 34, 35 or in a direction substantially corresponding to the direction of travel when the stroller 10 is unfolded, so that the lock portion 41 is received in the gap 43 both when the second locking means 35 is inserted into the first locking means 35 in a first direction and in an opposite second direction.

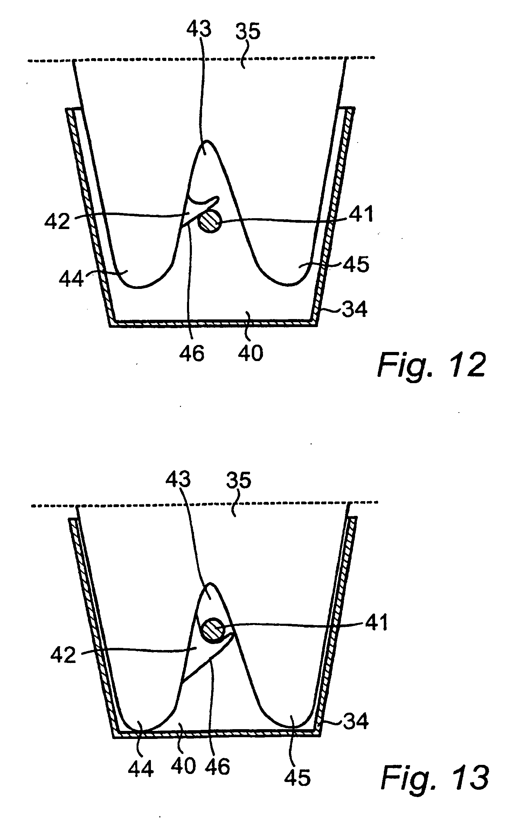

To connect the second locking means 35 with the first locking means 34 the second locking means 35 is inserted into the first locking means 34 in the direction of arrow H, wherein the lock hook 42 engages the lock portion 41 as illustrated in Fig. 12. The lock hook 42 is movably connected to the tongues 44, 45 and is arranged to be pushed aside by the lock portion 41, so that the lock hook 42 can be turned away or into a storing space in the first tongue 44 when the lock hook 42 passes the lock portion 41. For example, the lock hook 42 is formed with an inclined sliding surface 46 for sliding along the lock portion 41 while simultaneously turning into the storing space in the first tongue 44. Hence, the lock hook 42 is arranged so that it is forced to the side by the lock portion 41 when the second locking means 35 is inserted into the first locking means 34. When the lock portion 41 has passed the lock hook 42 the latter will spring back and form a locking mechanism as illustrated in Fig. 13, wherein the lock hook 42 partially encloses the lock portion 41 and prevents the latter from leaving the gap 43. To release the second locking means 35 from the first locking means 34 the lock hook 42 is moved into the storing space by means of a control means connected to the lock hook 42, which for example is a conventional control means.

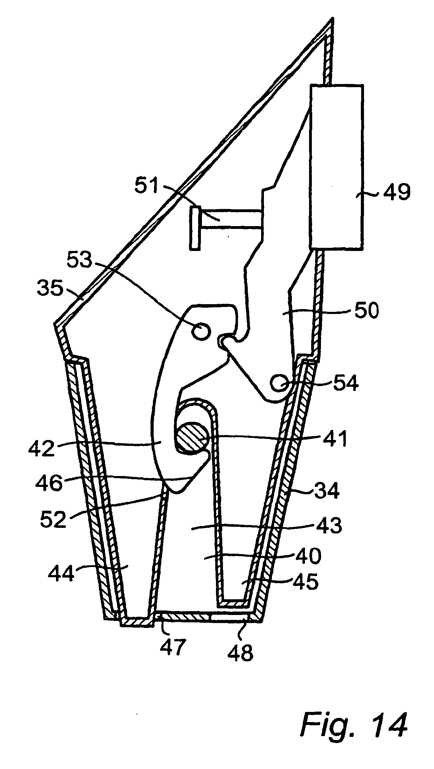

With reference to Fig. 14 the first locking means 34 and the second locking means 35 are illustrated according to an alternative embodiment of the invention. In the embodiment of Fig. 14 the first tongue 44 is somewhat longer than the second tongue 45, wherein a lower portion of the first locking means 35 is provided with a first opening 47 and a second opening 48 for receiving the first tongue 44. Hence, the first opening 47 is arranged for receiving the first tongue 44 when the second locking means 35 is arranged in a first direction, wherein the second opening 48 is arranged for receiving the first tongue 44 when the second locking means 35 is arranged in an opposite second direction.

As mentioned above the lock hook 42 is movably arranged and provided with a control means 49 for controlling the lock hook 42. For example, the control means 49 is connected to the lock hook 42 through a connecting link 50. For example, the connecting link 50, the control means 49 or the lock hook 42 is biased by means of a spring 51 or similar, wherein the lock hook 42 is biased towards the locked position in which it projects into the gap 43. When activating the control means 49 the lock hook 42 is displaced into a through aperture 52 in the first tongue 44, wherein the lock hook 42 is displaceable into a storing space in the first tongue 44 for releasing the lock portion 41, so that the second locking means 35 can be removed from the first locking means 34.

According to one embodiment of the present invention the lock hook 42 is pivotally arranged around a first lock pivot 53, wherein the connecting link 50 is pivotally arranged around a second lock pivot 54. The lock hook 42 is for example provided with a recess 55 for cooperation with a projection 56 of the connecting link 50, wherein turning of the connecting link 50 around the second lock pivot 54 by means of the control means 49 forces the lock hook 42 around the first lock pivot 53 and through the aperture 52 and further into the storing space in the first tongue 44 for unlocking the locking means 34,35.

## Claims

1. A stroller (10) comprising a foldable chassis (11) and a seat unit (12a) connected to the chassis (11), wherein the seat unit (12a) comprises a seat (13) and a foot rest (16) connected to the seat (13) through an articulated joint (15), and wherein the chassis (11) comprises a base (20) provided with wheels, a first bar (25) connected to the base (20) through a first pivot (23) and being provided with a handle (24), and a second bar (26) connecting the base (20) and the first bar (25), wherein
the second bar (26) is connected to the base (20) through a third pivot (31), and
the chassis (10) is provided with a stopping surface (32) for engaging a portion of the foot rest (16) when folding the stroller (10), wherein the foot rest (16) engages the stopping surface (32) during folding of the stroller (10) and a free end of the foot rest (16) is forced around the articulated joint (15) while forming an automatic folding of the foot rest (16) when the seat unit (12a) is positioned in a direction of travel of the stroller (10), ***characterised* in**
**that** the first bar (25) is pivotally connected to the second bar (26) through a link arm,
**that** the first bar (25) is provided with a second pivot (28) between the first pivot (23) and the link arm forming a first bar portion (29) between the first pivot (23) and the second pivot (28) and a second bar portion (30) between the second pivot (28) and the handle (24), and
**that** the first bar (25) is connected to the seat unit (12a), wherein an upper part of the second bar portion (30) of the first bar (25) is foldable forward in the direction of travel while bringing along the seat unit (12a) when folding the stroller (10).

2. A stroller according to claim 1, wherein a distance between the stopping surface (32) and the articulated joint (15) is smaller than a length of the foot rest (16), wherein a back portion of a free end of the foot rest (16) temporarily engages the stopping surface (32) when folding the stroller (10).

3. A stroller according to claim 1 or 2, wherein a cross bar (38) is connected to the base (20) and is provided with the stopping surface (32).

4. A stroller according to claim 3, wherein the cross bar (38) is formed with an upward projecting curve in a centre portion of the cross bar (38), which curve comprises the stopping surface (32).

5. A stroller according to claim 3 or 4, wherein the stopping surface (32) is formed by a front portion of a load tray (33), and the load space of the load tray (33) forms a storing space for the foot rest (16) in the folded position of the stroller (10).

6. A stroller according to any of the preceding claims, wherein the articulated joint (15) comprises a blocking device so that the foot rest (16) can be blocked in the desired position when the stroller (10) is in its unfolded position and wherein the blocking device is so arranged that it allows turning of the foot rest (16) around the articulated joint (15) in at least one direction when folding the stroller (10).

7. A stroller according to claim 6, wherein the blocking device is arranged for blocking the foot rest (16) against turning downward in a direction towards the stopping surface (32) and allowing turning in the opposite direction.

8. A stroller according to any of the preceding claims, wherein a loop (17) of the seat unit (12a) is connected through a lockable hinge (18) and wherein the lockable hinge (18) is arranged so that it is released when the foot rest (16) is folded to a predetermined angle towards the loop (17), so that the foot rest (16), during folding of the stroller (10), is turned while bringing the loop (17) along.

9. A stroller according to any of the preceding claims, wherein the first bar (25) is connected to the base (20) through the first pivot (23), is provided with a second pivot (28) and is connected to the second bar (26) through a link arm (27), and wherein the second bar (26) is connected to the base (20) through a third pivot (31).

10. A stroller according to claim 9, wherein the second pivot (28) is arranged between the first pivot (23) and the link arm (27).

11. A stroller according to any of the preceding claims, wherein the seat unit (12a) is detachably connectable to the chassis (11) by means of a first locking means (34) connected to the chassis (11) and a second locking means (35) connected to the seat unit (12a), which locking means (34, 25) are arranged so that the seat unit (12a) is detachably connectable to the chassis (11) in the direction of travel and in the opposite direction while the stroller (10) simultaneously is foldable irrespective of the direction of the seat unit (12a).

## Patentansprüche

1. Kinderwagen (10), umfassend einen klappbaren Rahmen (11) und eine Sitzeinheit (12a), die mit dem Rahmen (11) verbunden ist, wobei die Sitzeinheit (12a) einen Sitz (13) und eine Fußstütze (16) umfasst, die durch ein Gelenk (15) mit dem Sitz (13) verbunden ist, und wobei der Rahmen (11) eine Basis (20), die mit Rädern versehen ist, eine erste Stange (25), die durch einen ersten Drehpunkt (23) mit der Basis (20) verbunden und mit einem Griff (24) versehen ist, und eine zweite Stange (26), die die Basis (20) und die erste Stange (25) verbindet, umfasst, wobei
die zweite Stange (26) durch einen dritten Drehpunkt (31) mit der Basis (20) verbunden ist, und der Rahmen (10) mit einer Stoppfläche (32) versehen ist, um mit einem Teil der Fußstütze (16) in Eingriff zu gehen, wenn der Kinderwagen (10) zusammengeklappt wird, wobei die Fußstütze (16) mit der Stoppfläche (32) während des Zusammenklappens des Kinderwagens (10) in Eingriff geht, und ein freies Ende der Fußstütze (16) um das Gelenk (15) gepresst wird, wobei eine automatische Faltung der Fußstütze (16) gebildet wird, wenn die Sitzeinheit (12a) in der Fahrtrichtung des Kinderwagens (10) angeordnet wird, ***dadurch gekennzeichnet***
**dass** die erste Stange (25) durch einen Verbindungsarm schwenkbar mit der zweiten Stange (26) verbunden ist,
**dass** die erste Stange (25) mit einem zweiten Drehpunkt (28) zwischen dem ersten Drehpunkt (23) und dem Verbindungsarm versehen ist, bildend einen ersten Stangenteil (29) zwischen dem ersten Drehpunkt (23) und dem zweiten Drehpunkt (28) und einen zweiten Stangenteil (30) zwischen dem zweiten Drehpunkt (28) und dem Griff (24), und
**dass** die erste Stange (25) mit der Sitzeinheit (12a) verbunden ist, wobei ein oberer Teil des zweiten Stangenteils (30) der ersten Stange (25) vorwärts in die Fahrtrichtung zusammenklappbar ist, wobei die Sitzeinheit (12a) mitgenommen wird, wenn der Kinderwagen (10) zusammengeklappt wird.

2. Kinderwagen nach Anspruch 1, wobei ein Abstand zwischen der Stoppfläche (32) und dem Gelenk (15) kleiner als eine Länge der Fußstütze (16) ist, wobei ein Hinterteil eines freien Endes der Fußstütze (16) vorübergehend mit der Stoppfläche (32) in Eingriff ist, wenn der Kinderwagen (10) zusammengeklappt wird.

3. Kinderwagen nach Anspruch 1 oder 2, wobei eine Querstange (38) mit der Basis (20) verbunden und mit der Stoppfläche (32) versehen ist.

4. Kinderwagen nach Anspruch 3, wobei die Querstange (38) mit einer nach oben hervorstehenden Krümmung in einem Mittelteil der Querstange (38) gebildet ist, welche Krümmung die Stoppfläche (32) umfasst.

5. Kinderwagen nach Anspruch 3 oder 4, wobei die Stoppfläche (32) durch einen Vorderteil eines Ablagefachs (33) gebildet ist, und der Laderaum des Ablagefachs (33) einen Aufbewahrungsraum für die Fußstütze (16) in der zusammengeklappten Stellung des Kinderwagens (10) bildet.

6. Kinderwagen nach einem der vorgehenden Ansprüche, wobei das Gelenk (15) eine Blockiereinrichtung umfasst, so dass die Fußstütze (16) in der gewünschten Stellung blockiert werden kann, wenn der Kinderwagen (10) in seiner ungeklappten Stellung ist, und wobei die Blockiereinrichtung so angeordnet ist, dass sie ein Drehen der Fußstütze (16) um das Gelenk (15) in zumindest eine Richtung beim Zusammenklappen des Kinderwagens (10) ermöglicht.

7. Kinderwagen nach Anspruch 6, wobei die Blockiereinrichtung zum Blockieren der Fußstütze (16) gegen Drehen abwärts in eine Richtung gegen die Stoppfläche (32) und zum Ermöglichen eines Drehens in die gegensinnige Richtung eingerichtet ist.

8. Kinderwagen nach einem der vorgehenden Ansprüche, wobei ein Bügel (17) der Sitzeinheit (12a) durch eine arretierbare Angel (18) angeschlossen ist, und wobei die arretierbare Angel (18) so angeordnet ist, dass sie freigegeben wird, wenn die Fußstütze (16) zu einem vorbestimmten Winkel gegen den Bügel (17) zusammengeklappt wird, so dass die Fußstütze (16), während des Zusammenklappens des Kinderwagens (10), gedreht wird und dabei den Bügel (17) mitnimmt.

9. Kinderwagen nach einem der vorgehenden Ansprüche, wobei die erste Stange (25) mit der Basis (20) durch den ersten Drehpunkt (23) verbunden, mit einem zweiten Drehpunkt (28) versehen und mit der zweiten Stange (26) durch einen Verbindungsarm (27) verbunden ist, und wobei die zweite Stange (26) mit der Basis (20) durch einen dritten Drehpunkt (31) verbunden ist.

10. Kinderwagen nach Anspruch 9, wobei der zweite Drehpunkt (28) zwischen dem ersten Drehpunkt (23) und dem Verbindungsarm (27) angeordnet ist.

11. Kinderwagen nach einem der vorgehenden Ansprüche, wobei die Sitzeinheit (12a) mit dem Rahmen (11) mittels eines ersten Verriegelungsmittels (34), das mit dem Rahmen (11) verbunden ist, und eines zweiten Verriegelungsmittels (35), das mit der Sitzeinheit (12a) verbunden ist, lösbar verbunden werden kann, welche Verriegelungsmittel (34, 25) so angeordnet sind, dass die Sitzeinheit (12a) in der Fahrtrichtung und in der gegensinnigen Richtung mit dem Rahmen (11) lösbar verbunden werden kann, während der Kinderwagen (10) unabhängig von der Richtung der Sitzeinheit (12a) gleichzeitig zusammenklappbar ist.

## Revendications

1. Poussette (10) comprenant un châssis pliable (11) et une unité de siège (12a) reliée au châssis (11), l'unité de siège (12a) comprenant un siège (13) et un repose-pied (16) relié au siège (13) par un joint articulé (15), et le châssis (11) comprenant une base (20) munie de roues, une première barre (25) reliée à la base (20) par un premier pivot (23) et étant pourvue d'une poignée (24), et une deuxième barre (26) reliant la base (20) et la première barre (25),
la deuxième barre (26) étant reliée à la base (20) par un troisième pivot (31), et le châssis (10) étant pourvu d'une surface d'arrêt (32) pour venir en prise avec une portion du repose-pied (16) lors du pliage de la poussette (10), le repose-pied (16) venant en prise avec la surface d'arrêt (32) lors du pliage de la poussette (10) et une extrémité libre du repose-pied (16) étant forcée autour du joint articulé (15) tout en formant un pliage automatique du repose-pied (16) lorsque l'unité de siège (12a) est positionnée dans une direction de déplacement de la poussette (10), **caractérisée en ce**
**que** la première barre (25) est reliée à pivotement à la deuxième barre (26) par un bras de liaison,
**que** la première barre (25) est pourvue d'un deuxième pivot (28) arrangé entre le premier pivot (23) et le bras de liaison et formant une première portion de barre (29) arrangée entre le premier pivot (23) et le deuxième pivot (28) et une deuxième portion de barre (30) arrangée entre le deuxième pivot (28) et la poignée (24), et
**que** la première barre (25) est reliée à l'unité de siège (12a), une partie supérieure de la deuxième portion de barre (30) de la première barre (25) étant pliable en avant dans la direction de déplacement en apportant l'unité de siège (12a) lors du pliage de la poussette (10).

2. Poussette selon la revendication 1, dans laquelle une distance entre la surface d'arrêt (32) et le joint articulé (15) est inférieure à la longueur du repose-pied (16), dans laquelle une partie arrière d'une extrémité libre du repose-pied (16) vient en prise temporaire avec la surface d'arrêt (32) lors du pliage de la poussette (10).

3. Poussette selon la revendication 1 ou 2, dans laquelle une barre transversale (38) est reliée à la base (20) et est pourvue de la surface d'arrêt (32).

4. Poussette selon la revendication 3, dans laquelle la barre transversale (38) est formée avec une courbe en saillie vers le haut dans une partie centrale de la barre transversale (38), ladite courbe comprenant la surface d'arrêt (32).

5. Poussette selon la revendication 3 ou 4, dans laquelle la surface d'arrêt (32) est formée par une partie avant d'un plateau de charge (33), et l'espace de charge du plateau de charge (33) forme un espace de stockage pour le repose-pied (16) dans la position repliée de la poussette (10).

6. Poussette selon l'une quelconque des revendications précédentes, dans laquelle le joint articulé (15) comprend un dispositif de blocage si bien que le repose-pied (16) peut être bloqué dans la position désirée lorsque la poussette (10) est dans sa position non pliée, et dans laquelle le dispositif de blocage est arrangé de manière à permettre la rotation du repose-pied (16) autour du joint articulé (15) dans au moins une direction lors du pliage de la poussette (10).

7. Poussette selon la revendication 6, dans laquelle le dispositif de blocage est agencé pour bloquer le repose-pied (16) pour empêcher la rotation vers le bas dans une direction vers la surface d'arrêt (32) et permettant la rotation dans la direction opposée.

8. Poussette selon l'une quelconque des revendications précédentes, dans laquelle une boucle (17) de l'unité de siège (12a) est reliée par une articulation verrouillable (18) et dans laquelle l'articulation verrouillable (18) est agencée de manière à être libérée lorsque le repose-pied (16) est plié à un angle prédéterminé vers la boucle (17), si bien que le repose-pied (16), lors du pliage de la poussette (10), est tourné tout en apportant la boucle (17).

9. Poussette selon l'une quelconque des revendications précédentes, dans laquelle la première barre (25) est reliée à la base (20) par le premier pivot (23), est pourvue d'un deuxième pivot (28) et est reliée à la deuxième barre (26) par un bras de liaison (27), et dans laquelle la deuxième barre (26) est reliée à la base (20) par un troisième pivot (31).

10. Poussette selon la revendication 9, dans laquelle le deuxième pivot (28) est arrangé entre le premier pivot (23) et le bras de liaison (27).

11. Poussette selon l'une quelconque des revendications précédentes, dans laquelle l'unité de siège (12a) peut être reliée de manière amovible au châssis (11) au moyen d'un premier moyen de verrouillage (34) relié au châssis (11) et un deuxième moyen de verrouillage (35) relié à l'unité de siège (12a), lesdits moyens de verrouillage (34, 25) étant disposés si bien que l'unité de siège (12a) est reliée de manière détachable au châssis (11) dans la direction de déplacement et dans la direction opposée tandis que la poussette (10) est en même temps pliable quelle que soit la direction de l'unité de siège (12a).
